# FASCICULE DE BREVET EUROPEEN

(11) **EP 1 905 194 B1**
(45) Date de publication et mention de la délivrance du brevet: **24.12.2008**
(21) Numéro de dépôt: 06778703.6
(22) Date de dépôt: 28.06.2006
(51) Int. Cl.: H04L 12/26

(54) **DETECTION DE DOUBLE ATTACHEMENT ENTRE UN RESEAU FILAIRE ET AU MOINS UN RESEAU SANS-FIL**
DETEKTIEREN EINES DOPPELANSCHLUSSES ZWISCHEN EINEM VERDRAHTETEN NETZ UND MINDESTENS EINEM DRAHTLOSEN NETZ
DETECTING DOUBLE ATTACHMENT BETWEEN A WIRED NETWORK AND AT LEAST ONE WIRELESS NETWORK

(30) Priorité: 18.07.2005 FR 0507608
(43) Date de publication de la demande: 02.04.2008
(73) Titulaire: France Télécom, 75015 Paris (FR)
(72) Inventeur: BUTTI, Laurent, F-92130 Issy les Moulineaux (FR); LECLERQ, Eric, F-75007 France (FR); VEYSSET, Franck, F-92130 Issy les Moulineaux (FR)
(74) Mandataire: Cabinet Plasseraud
(86) Numéro de dépôt international: PCT/FR2006/001510
(87) Numéro de publication internationale: WO 2007/010103

(56) Documents cités:
- EP-A- 1 542 406
- WO-A-03/093951
- US-A1- 2004 003 285

## Description

La présente invention concerne, de manière générale, la détection d'un risque de détournement de données privées dans une communication ("payload" selon la terminologie anglo-saxonne).

En particulier, des réseaux sans-fil, notamment ceux spécifiés dans les normes IEEE802.11 de 1997 et 1999, sont actuellement très utilisés dans des contextes de "Hot-Spots", Entreprises et/ou Résidentiels, utilisant la technique communément appelée "Wi-Fi". Le principe est le suivant : un terminal mobile, tel qu'un ordinateur portable, est muni d'une interface de communication de type Wi-Fi avec un réseau sans-fil, ce réseau sans-fil étant relié lui-même à un réseau filaire, par exemple un réseau local d'une entreprise ou un réseau étendu comme l'Internet. Cette mesure permet ainsi à un utilisateur du terminal mobile-de se connecter au réseau filaire tout en étant en situation de mobilité.

Cette technique apporte de nouveaux usages, mais apporte aussi certaines vulnérabilités. En effet, l'accès à un réseau filaire via une interface sans-fil peut entraîner des risques de détournement malintentionné de données privées si l'accès au réseau sans-fil (par une personne quelconque par la voie radiofréquence) n'est pas contrôlé.

La situation est particulièrement sensible dans le contexte "réseaux sans-fil d'entreprise" où la menace provient essentiellement des équipements nomades tels que les ordinateurs portables qui embarquent par défaut (en standard) une carte Wi-Fi intégrée. Ces ordinateurs peuvent avoir des configurations qui par défaut se connectent automatiquement à tout réseau Wi-Fi ouvert. On entend par "ouvert" le fait que le réseau devienne alors accessible directement sans authentification ni chiffrement de la voie radio. Il s'ensuit alors des problèmes de sécurité car des équipements de l'entreprise se retrouvent connectés à des réseaux Wi-Fi inconnus. Si l'ordinateur portable est aussi connecté au réseau local de l'entreprise via son interface filaire (par exemple avec une carte réseau Ethernet), alors l'ordinateur portable se retrouve dans une situation dite de "double attachement" (DA). Cette situation est critique pour la sécurité du réseau de l'entreprise car ce réseau peut se retrouver interconnecté à un réseau inconnu sans aucun contrôle d'accès, l'ordinateur ainsi interconnecté à ces deux réseaux offrant à des attaquants la possibilité de rebondir d'un réseau à l'autre.

Il existe en tant que solution actuelle des outils qui permettent d'éviter le double attachement entre un réseau filaire et un réseau sans-fil, mais cette solution nécessite une installation de l'outil sur tous les équipements de type ordinateur portable. Toutefois, il est bien des cas où il semble difficile d'installer ces outils sur tous les ordinateurs portables qui se connectent à une entreprise, notamment lorsqu'il s'agit d'ordinateurs de tests, d'ordinateurs n'appartenant pas à l'entreprise ou autres. De manière plus générale, cette mesure implique ainsi d'avoir la maîtrise de tous les équipements communiquant avec le réseau sans-fil. Or, malheureusement, tel n'est pas toujours le cas dans une entreprise, en particulier lorsqu'elle dispose d'un parc important d'ordinateurs portables. De la même manière, il est possible que l'outil permettant d'empêcher le double attachement ne soit pas activé pour une raison quelconque.

Bien qu'il s'agisse d'un problème extrêmement critique pour la sécurité d'une entreprise, il n'existe pas à l'heure actuelle de technique de détection d'un double attachement entre un réseau filaire et un réseau sans-fil qui soit utilisable et efficace à la fois sur des équipements maîtrisés ou non maîtrisés de l'entreprise.

La présente invention vient améliorer la situation.

Elle propose à cet effet un procédé de détection d'une situation de double attachement d'un équipement communicant, cet équipement comportant des moyens de communication avec un réseau sans-fil, d'une part, et avec un réseau filaire, d'autre part, la situation dé double attachement étant définie par une connexion de l'équipement à la fois au réseau sans-fil et au réseau filaire..

Selon l'invention, on exploite le fait que les connexions avec le réseau filaire et avec le réseau sans-fil sont établies par envoi d'une requête de l'équipement, cette requête comportant un identifiant propre à l'équipement, selon un protocole de configuration de connexion prédéterminé. Ainsi, le procédé au sens de l'invention peut être défini par les étapes suivantes :
a) on écoute, au moins sur le réseau sans-fil, des requêtes de configuration de connexion émises par un ou plusieurs équipements,
b) on analyse le contenu de ces requêtes de configuration de connexion et on en extrait des identifiants d'équipement,
c) à partir d'un identifiant d'équipement extrait à l'étape b), on détermine si cet équipement a envoyé en outre une requête de configuration de connexion au moins au réseau filaire avec le même identifiant, et
d) on lève une alerte si le résultat de l'étape c) est positif.

La présente invention vise aussi un dispositif pour la mise en oeuvre du procédé, comportant :
a) des moyens de sonde du réseau sans-fil au moins, pour détecter des requêtes de configuration de connexion émises par un ou plusieurs équipements,
b) des moyens d'analyse du contenu de ces requêtes de configuration de connexion et d'extraction des identifiants d'équipement dans ces requêtes,
c) des moyens de comparaison pour, à partir d'un identifiant d'équipement extrait, déterminer si cet équipement a envoyé en outre une requête de configuration de connexion au moins au réseau filaire avec le même identifiant, une détermination positive caractérisant un double attachement possible, et
d) des moyens d'alarme pour lever une alerte en cas de détermination positive.

La présente invention vise aussi un programme d'ordinateur, téléchargeable via un réseau de télécommunication et/ou destiné à être stocké dans une mémoire d'un dispositif et/ou stocké sur un support mémoire destiné à coopérer avec un lecteur de ce dispositif, ce dispositif, pour la mise en oeuvre du procédé ci-avant, comportant :
a) des moyens de sonde du réseau sans-fil au moins, pour détecter des requêtes de configuration de connexion émises par un ou plusieurs équipements.

Le programme d'ordinateur au sens de l'invention comporte alors des instructions qui, lorsqu'elles sont exécutées sur le dispositif précité, réalisent les étapes b), c) et d) du procédé ci-avant.

La présente invention vise aussi un support de stockage de données comprenant des instructions de code de programme informatique pour l'exécution des étapes d'un procédé tel que défini ci avant.

Dans un premier mode de réalisation de l'invention :
a) on écoute, à la fois sur le réseau sans-fil et sur le réseau filaire, des requêtes de configuration de connexion émises par un ou plusieurs équipements,
b) on analyse le contenu de ces requêtes de configuration de connexion et on en extrait des identifiants d'équipement, à la fois pour les requêtes émises sur le réseau sans-fil et pour les requêtes émises sur le réseau filaire,
c) par comparaison des identifiants d'équipement dans les requêtes sur les réseaux filaire, d'une part, et sans-fil, d'autre part, on détermine si un équipement a envoyé des requêtés de configuration de connexion à la fois sur le réseau filaire et sur le réseau sans-fil avec le même identifiant, et
d) on lève une alerte si le résultat de l'étape c) est positif.

On applique préférentiellement une temporisation de durée choisie entre une comparaison positive à l'étape c) et une levée effective de l'alerte à l'étape d).

Dans un second mode de réalisation, dans lequel on peut accéder à des informations de configuration de connexion auprès d'au moins un serveur relié au réseau filaire :
a) on écoute, au moins sur le réseau sans-fil, des requêtes de configuration de connexion émises par un ou plusieurs équipements,
b) on analyse le contenu des requêtes de configuration de connexion et on en extrait des identifiants d'équipement,
c) on interroge le serveur précité sur la base d'un identifiant d'équipement extrait à l'étape b) pour déterminer si cet équipement a envoyé en outre une requête de configuration de connexion au moins au réseau filaire avec le même identifiant, et
d) on lève une alerte si le résultat de l'étape c) est positif.

Une même entité peut gérer à la fois le réseau sans-fil et le réseau filaire. Dans ce cas, cette même entité peut accéder à des informations de configuration de connexion auprès d'un premier serveur relié au réseau filaire et, en outre, auprès d'un second serveur relié au réseau sans-fil, et dans ce second mode de réalisation :
a) on écoute, à la fois sur le réseau sans-fil et sur le réseau filaire, des requêtes de configuration de connexion émises par un ou plusieurs équipements,
b) on analyse le contenu des requêtes de configuration de connexion et on en extrait des identifiants d'équipement,
et à l'étape c), on interroge le premier serveur ou le second serveur, sur la base d'un identifiant d'équipement extrait à l'étape b) d'une requête reçue sur le réseau sans-fil ou sur le réseau filaire, respectivement.

De manière générale, on prévoira préférentiellement que le dispositif destiné à des détections de double attachement :
- entre un réseau filaire et un réseau sans-fil, gérés par une même entité,
- et entre le réseau filaire et un réseau sans-fil quelconque, comporte :

- des moyens de sonde radio du réseau sans-fil quelconque précité,
- des moyens de sonde filaires du réseau sans-fil qui est géré par l'entité, et
- des moyens de sonde filaires du réseau filaire.

D'autres caractéristiques et avantages de l'invention apparaîtront à l'examen de la description détaillée ci-après, et des dessins annexés sur lesquels :
- la figure 1 illustre schématiquement une architecture dans laquelle une entreprise a la maîtrise des deux réseaux filaire et sans-fil, dans un premier contexte d'application de la présente invention,
- la figure 2 illustre schématiquement une architecture dans laquelle l'entreprise n'a la maîtrise que du réseau filaire, dans un second contexte possible d'application de la présente invention,
- la figure 3A illustre les étapes d'un procédé au sens de l'invention, dans un premier mode de réalisation, et, de là, un organigramme possible de l'algorithme général d'un programme d'ordinateur pour la mise en oeuvre de l'invention,
- la figure 3B illustre les étapes d'un procédé au sens de l'invention, dans un second mode de réalisation, et, de là, un organigramme possible de l'algorithme général d'un programme d'ordinateur pour la mise en oeuvre de l'invention selon une variante de la figure 3A,
- la figure 4 représente schématiquement un dispositif pour la mise en oeuvre de l'invention.

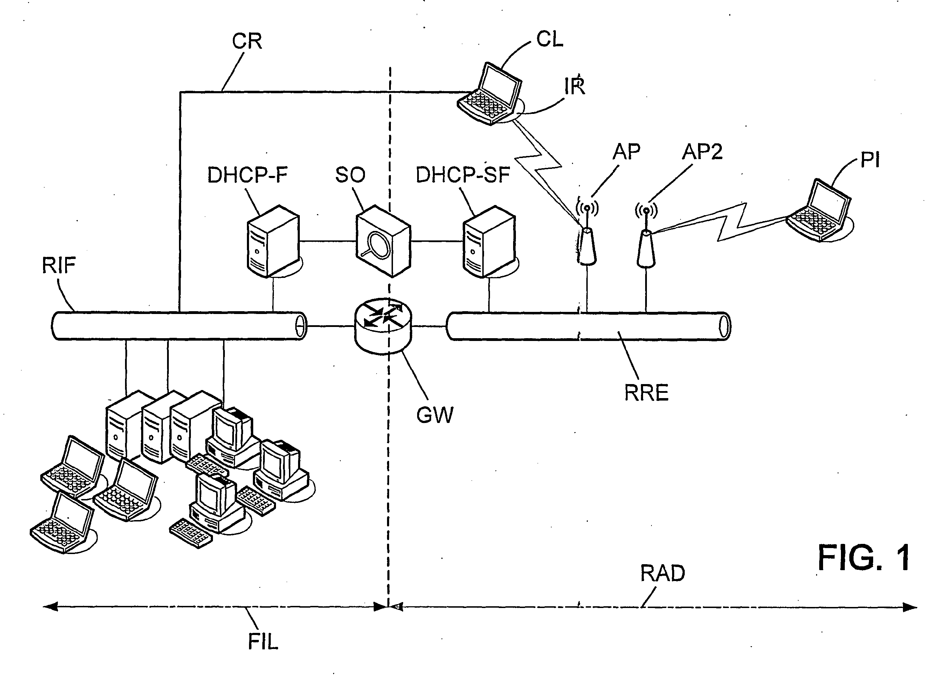

La présente invention propose la détection d'un équipement communicant CL, tel qu'un ordinateur portable, en situation de double attachement entre un réseau filaire FIL et un réseau sans-fil RAD (figure 1), notamment de type Wi-Fi. Elle a pour but de lever des alarmes à destination d'un administrateur, par exemple l'administrateur du réseau filaire, afin d'entreprendre les actions nécessaires pour déconnecter l'équipement ainsi détecté.

Avant de décrire en détail les étapes du procédé au sens de l'invention, on rappelle ci-après le processus d'association à un point d'accès typiquement d'un hot-spot.

Le processus d'association d'un client à un point d'accès peut se dérouler en plusieurs phases.

En premier lieu, pour réaliser la découverte du point d'accès, deux techniques sont possibles.

On peut prévoir une écoute de la voie radio pour rechercher des trames spécifiques appelées "balises" (ou "Beacon"). L'équipement de l'utilisateur (appelé ci-après "client") regarde les informations contenues dans ce type de trame, par exemple le nom de réseau (ou "ESSID" pour "Extended Service Set ldentifier" selon la terminologie de la norme IEEE 802.11) et les paramètres propres au réseau déployé (par exemple les capacités radio, en terme de débits supportés).

Une autre technique possible consiste à envoyer des trames de recherche de points d'accès appelées "Probe Request" contenant le nom de réseau (ESSID) recherché. Le(s) point(s) d'accès concerné(s) répond(ent) à la requête en renvoyant un "Probe Response" signalant alors leur présence.

En fonction des éléments découverts ci-dessus, le client sélectionne le point d'accès adéquat et demande à s'authentifier auprès de ce point d'accès.

Si l'authentification a réussi, alors le client demande à s'associer auprès de ce point d'accès. On indique que deux types d'authentification existent : l'une en mode "Ouvert" où toute demande d'authentification est acceptée par défaut, et l'autre en mode "Secret Partagé" où la connaissance d'un secret partagé entre le point d'accès et le client est nécessaire pour s'authentifier auprès du point d'accès.

Si l'association a réussi, alors le client est capable d'envoyer et de recevoir des données via le point d'accès auquel il est connecté. Il est alors possible pour le client d'utiliser des protocoles de couches supérieures, comme par exemple IP, pour communiquer avec d'autres hôtes. Pour cela, il utilise généralement le protocole DHCP (pour "Dynamic Host Control Protocol"). Cette mesure permet au client de communiquer avec un serveur DHCP qui lui attribuera les informations de connectivité IP pour fonctionner correctement (typiquement une adresse IP, un masque de sous-réseau, une adresse de passerelle par défaut, des adresses serveurs de nom DNS (pour "Domain Name System"), etc). Ce mode de fonctionnement est très répandu en particulier sur les ordinateurs portables car il est difficilement envisageable d'avoir une configuration statique IP pour des contraintes évidentes d'ergonomie.

On décrit ci-après le protocole DHCP, tel que proposé dans la norme RFC 2131 de l'IETF.

Le client envoie une requête DHCP-DISCOVER qui a pour but de rechercher les serveurs DHCP présents sur le réseau sur lequel il envoie la requête.

Les serveurs DHCP présents sur le réseau qui recoivent la requête du client, répondent alors par une réponse DHCP-OFFER contenant les offres dites "de bail" destinées au client. On rappelle que le bail est une notion du mécanisme DHCP qui permet d'attribuer une adresse IP à un client pendant une certaine durée. A l'issue de ce bail, si le renouvellement du bail n'a pas été demandé par le client, alors le serveur DHCP considère que le bail est terminé et il peut alors attribuer à nouveau la même adresse IP à un client différent.

Le client choisit alors son serveur DHCP adéquat et envoie une requête DHCP-REQUEST vers le serveur DHCP de son choix en spécifiant les informations demandées par rapport au contenu des propositions faites dans les réponses DHCP-OFFER précédemment reçues.

Le serveur DHCP qui reçoit la requête DHCP-REQUEST du client la valide en renvoyant une réponse DHCP-ACK ou l'invalide en renvoyant une réponse DHCP-NACK.

On retiendra que les requêtes DHCP du client sont faites, concrètement, à trois moments :
- lors de l'initialisation de l'interface réseau, afin de récupérer les paramètres de connexion ;
- à la moitié du bail alloué par le serveur, afin de vérifier que celui-ci est encore bien valide ;
- à la fin du bail, pour renouveler celui-ci.

Ainsi, la détection de double attachement au sens de l'invention pourra se faire pendant ces envois. Les trames DHCP-DISCOVER et DHCP-REQUEST contiennent des informations obligatoires, ainsi qu'un certain nombre d'options, ajoutées à la discrétion du client.

Parmi ces options, on s'intéresse ici aux :
- option 12 : "Host Name", correspondant au nom de la machine qui fait la requête ;
- option 55 : "Parameters List", correspondant à la liste des paramètres que le client demande au serveur DHCP ;
- option 60 : "Vendor Class Identifier", correspondant à une valeur identifiant le type d'équipement qui fait la requête ;
- option 81 : "FQDN", correspondant au nom complet de la machine qui fait la requête.

Les options 12 et 81 ont notamment pour but l'identification du client qui fait la requête. Elles sont communément utilisées pour la mise à jour automatique des entrées du serveur DNS. L'option 81 n'est pas présente, en principe, dans les trames DHCP-DISCOVER. On indique que la norme RFC 2132 sur le protocole DHCP spécifie le caractère optionnel ou obligatoire des champs notés "options". Néanmoins, ces options sont incluses dans les messages DHCP, en général à la discrétion du client, et en pratique la plupart des clients DHCP utilisent les options 12, 55, 60, 81 et au moins les options 12 et 81 par défaut.

Ainsi, une entreprise possédant un réseau interne, filaire (typiquement un Intranet), cherche à se protéger de doubles attachements. L'équipement client (par exemple un ordinateur portable) est branché sur ce réseau local filaire. L'interface filaire (par exemple une carte réseau Ethernet) récupère une adresse IP grâce à des échanges DHCP avec un serveur DHCP situé sur le réseau local de l'entreprise. L'utilisation du protocole DHCP est courante dans les réseaux d'entreprise car elle évite d'utiliser une adresse IP fixe, d'autant plus que les ordinateurs portables se déplacent de réseau en réseau et il est donc extrêmement pratique de pouvoir récupérer les informations de connectivité du réseau sur lequel l'ordinateur portable se situe grâce au protocole DHCP.

La maîtrise par un administrateur réseau du réseau filaire implique que l'on peut donc :
- être au courant des requêtes et réponses DHCP qui sont faites sur ce même réseau (soit par interfaçage avec le serveur DHCP, soit par une écoute passive sur le réseau) ;
- émettre des paquets vers toute machine présente sur ce réseau (par simples paquets, ou par communications entières).

Lorsque le même équipement client a une interface radio IEEE 802.11 activée, il est ainsi potentiellement en double attachement. S'il est associé de façon effective à un réseau Wi-Fi, il est alors forcément en situation de double attachement. Cette situation peut entraîner des vulnérabilités critiques à la fois pour le poste du client, mais aussi et surtout pour les réseaux de l'entreprise car cette interconnexion ouvre une brèche dans toute la sécurité des réseaux de l'entreprise.

Il peut alors être distingué deux cas possibles en pratique, comme suit.

Le réseau Wi-Fi auquel le client se connecte peut être maîtrisé par l'entreprise. Il s'agit typiquement alors d'un accès légitime via un point d'accès ouvert sur lequel le client peut ensuite monter une connexion sécurisée. On appellera ce réseau le "réseau Wi-Fi de l'entreprise". Il est constitué d'un ensemble de points d'accès Wi-Fi, reliés entre eux par un réseau filaire.

Autrement, le réseau Wi-Fi auquel le client se connecte peut ne pas être maîtrisé par l'entreprise. Il peut alors intervenir un point d'accès illégitime (correspondant à une attaque volontaire visant à faire créer un double attachement afin que l'attaquant puisse rebondir via l'équipement client en situation de double attachement vers le réseau filaire de l'entreprise), Il peut s'agir aussi d'un point d'accès interférent (typiquement un point d'accès ouvert mal configuré appartenant à un réseau voisin ou un accès public tel qu'un hot spot).

La présente invention met en oeuvre une sonde correspondant à un équipement réseau, contrôlé par l'entreprise, et dont le rôle est de détecter les doubles attachements. Comme on le verra plus loin, cette sonde réalise des écoutes sur la voie filaire et sur la voie radio. Le but est de procéder à un recoupement d'informations présentes dans le protocole DHCP, ces informations étant à la fois émises depuis l'interface filaire et depuis l'interface sans-fil d'un même équipement client. Le procédé repose sur un principe selon lequel les informations contenues dans le protocole DHCP permettent de connaître certaines caractéristiques qui sont propres au client, ce qui permet alors de repérer un même client à la fois côté filaire et côté sans-fil.

On décrit ci-après deux contextes distincts d'application.

Dans un premier cas, illustré sur la figure 1, on maîtrise le réseau sans-fil. On dispose d'un ensemble de points d'accès par exemple selon la norme 802.11 distribués sur le site d'une entreprise qui permettent à un visiteur ou à un nomade d'accéder au réseau interne, via un tunnel sécurisé (par exemple un tunnel IPsec). Un équipement tel qu'une passerelle (par exemple IPsec) fait donc la jonction entre la partie sédentaire (filaire) et la partie nomade (radio). Les doubles attachements possibles sont ici ceux entre le réseau filaire de l'entreprise et le réseau sans-fil de la même entreprise.

La maîtrise du réseau sans-fil de l'entreprise implique que l'on puisse bénéficier des mêmes possibilités côté radio et côté filaire, à savoir :
- connaître les requêtes et réponses DHCP qui sont faites sur ce réseau (soit par interfaçage avec le serveur DHCP, soit par une écoute passive sur le réseau filaire et/ou sur le réseau sans-fil) ;
- émettre des paquets vers toute machine présente sur le réseau.

Par conséquent, la sonde de détection de doubles attachements au sens de l'invention peut avantageusement être connectée au réseau filaire qui relie les points d'accès entre eux.

On décrit ci-après le principe de la détection dans ce premier cas de la figure 1. Typiquement, un poste client CL initie sa connexion dans les conditions suivantes :
- le câble réseau CR de son équipement est connecté au réseau interne filaire RIF ;
- une interface radio IR de son équipement est activée et associée à un réseau radio de l'entreprise RRE, via un point d'accès légitime AP.

Le réseau sans-fil RRE et le réseau filaire RIF sont reliés entre eux par une passerelle GW. Ici, un pirate PI peut se connecter au réseau sans-fil RRE via un point d'accès Wi-Fi AP2 et profiter du double attachement du client légitime CL pour accéder au réseau filaire.

La sonde SO, analysant les requêtes et réponses DHCP côté filaire DHCP-F et côté sans-fil DHCP-SF, opère préférentiellement comme suit. Lorsque l'équipement CL entre en phase de configuration de ses paramètres réseau, il émet des requêtes DHCP par toutes ses interfaces. La sonde au sens de l'invention utilise alors certains champs présents dans les paquets DHCP envoyés par le client CL, notamment l'information correspondant au nom d'hôte ou "Host Name" dans l'option 12. Un nom d'équipement dans l'option 12, en général défini lors de l'installation réseau de façon unique pour chaque équipement, assure la possibilité d'identifier la source des requêtes DHCP. Les options identifiant le nom d'équipement sont en principe présentes dans les paquets DHCP (en particulier l'option 12 "Host Name"). En allant plus loin, il est avantageusement possible de tirer aussi parti de techniques de prise d'empreintes d'un équipement suspecté d'être en double attachement afin d'avoir un niveau de détection encore plus fiable, comme on le verra plus loin.

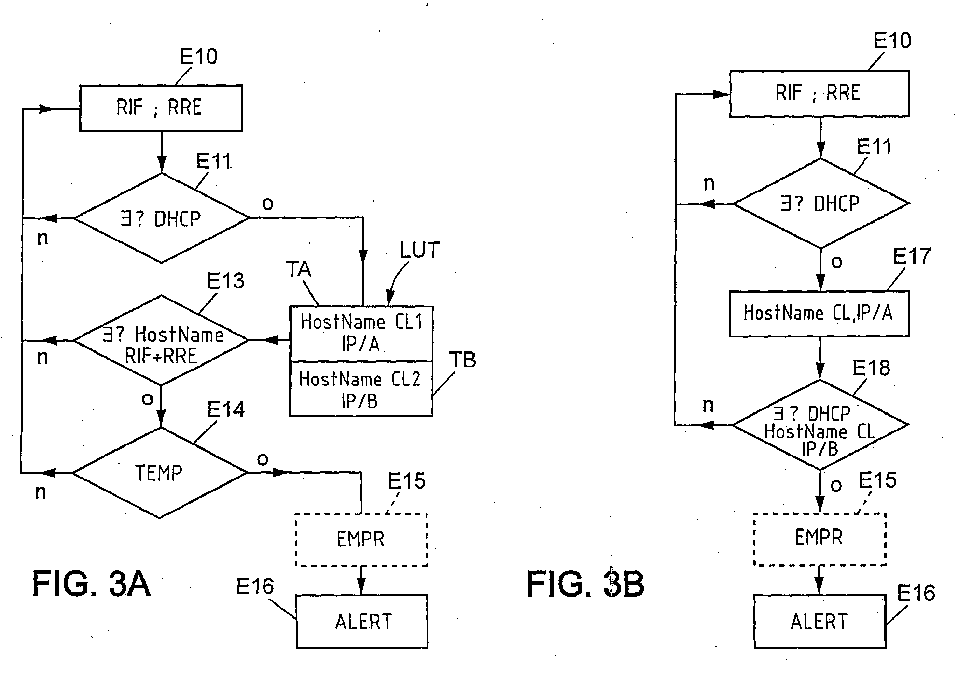

Deux réalisations possibles pour la détection dans le contexte de la figure 1 sont décrites ci-après, respectivement en référence aux figures 3A et 3B.

En référence à la figure 3A, à l'étape E10, la sonde écoute des deux côtés (filaire et radio) des requêtes DHCP. Si la sonde détecte la réception d'une requête DHCP d'un client connecté côté A (soit du côté filaire, soit du côté radio) au test E11, elle extrait et analyse des informations DHCP qui sont les plus pertinentes puis les stocke dans une première table de connexion TA qui mettra en correspondance le nom identifiant le client CL (Host Name), l'adresse IP et d'autres optons propres au côté A. La pertinence des informations stockées dans la table de connexion est fonction des critères de recherche utilisés pour la mise en oeuvre de l'invention. On indique en particulier que les informations utiles peuvent être les options 12, 55, 60 et 81 décrites précédemment.

Ensuite, sur réception d'une requête DHCP du même client CL mais cette fois côté B (notation dans laquelle : si A est le côté filaire alors B est le côté radio, et vice-versa), la sonde extrait et analyse les informations DHCP qui sont les plus pertinentes puis les stocke dans une seconde table de connexion TB qui met encore en correspondance lé Host Name, l'adresse IP et d'autres options côté B. La sonde compare des informations des deux tables de connexion TA et TB sur un critère discriminant tel que l'identifiant Host Name du client. En particulier au test E13, si le même identifiant Host Name est présent dans les deux tables de connexion à la fois pour le côté A et pour le côté B (flèche o en sortie du test E13), c'est-à-dire à la fois dans le réseau sans-fil et dans le réseau filaire, et.ce dans une fenêtre de temps prédéfinie (en sortie du test de temporisation E14), alors une alarme de type double attachement peut être levée à l'étape E16. La fenêtre de temps intervenant au test de temporisation E14 est avantageusement définie notamment en fonction des baux attribués côté A et côté B. Bien entendu, les deux tables de connexion TA et TB peuvent être regroupées dans une même table de connexion commune LUT ou, au moins, être stockées dans une même mémoire.

Dans une réalisation optionnelle, pour confirmer la pertinence de l'alerte de l'étape E16, il peut être alors avantageux de faire une prise d'empreinte du système, sur le côté filaire et le côté radio (étape E15 illustrée en traits pointillés sur la figure 3A). Cette étape de prise d'empreinte E15 est menée, de préférence, avant une levée effective de l'alerte à l'étape E16. Bien qu'avantageuse, cette prise d'empreinte n'est, en réalité, aucunement nécessaire pour la mise en oeuvre de l'invention. En effet, il existe des cas où cette prise d'empreinte ne pourra même pas être mise en oeuvre (par exemple dans le cas d'un client qui n'accepte pas d'être interrogé).

En revanche, il est avantageux de bien définir la fenêtre temporelle pour la temporisation E14. La durée de l'intervalle entre les requêtes DHCP, côté filaire et côté radio, est un paramètre qui peut être choisi selon le compromis suivant. L'équipement en double attachement doit être effectivement présent au même moment sur le réseau radio et sur le réseau filaire de sorte que l'intervalle de temps devrait être relativement court. D'un autre côté, l'identifiant Host Name (par exemple côté filaire) a pu être affecté et le bail correspondant est encore en vigueur, alors que le client vient de se déconnecter du réseau.

En référence maintenant à la figure 3B, on décrit une seconde réalisation possible.

Dans ce mode de réalisation, on écoute encore les requêtes DHCP des deux côtés (filaire et radio) à l'étape E10. On précise que l'écoute côté radio peut être réalisée avec un équipement filaire connecté au réseau sans-fil. La sonde repère la réception d'une requête DHCP d'un client côté A (étape E11). Elle extrait et analyse les informations DHCP qui sont les plus pertinentes, en particulier l'identifiant Host Name, l'adresse IP et autres options côté A (étape E17). La sonde interroge ensuite, au test E18, le serveur DHCP côté B (DHCP-F ou DHCP-SF), afin de connaître l'adresse IP associée au même identifiant Host Name. Si une réponse existe (flèche o en sortie du test E18), alors une alerte est levée pour double attachement à l'étape E16.

Là encore, il peut être avantageux, pour confirmer la pertinence de l'alerte, de faire une prise d'empreinte du système (étape E15), par le côté filaire et le côté radio.

Dans les deux modes de réalisation des figures 3A et 3B, l'alarme remontée peut inclure de nombreuses informations, qui sont avantageusement choisies initialement par un administrateur de site, en tant qu'option de configuration de la sonde au sens de l'invention. En particulier, les adresses IP côté filaire et radio peuvent être intéressantes, en plus, bien entendu, de l'identifiant Host Name incriminé.

La prise d'empreinte E15 permet avantageusement de réduire les possibilités de faux positifs. On couple ici la suspicion de double attachement à une vérification active de la présence effective de l'équipement dans les deux réseaux (à un même instant). La prise d'empreinte consiste en particulier à envoyer un ensemble de paquets spécifiques (appelés "stimuli") et à analyser ensuite des réponses permettant de déterminer un certain nombre de caractéristiques propres au client. Il est par exemple possible de connaître le type et la version du système d'exploitation utilisé dans l'équipement, ainsi que la durée depuis laquelle l'équipement est activé.

On comprendra finalement que les deux modes de réalisation des figures 3A et 3B se distinguent essentiellement en ce que, dans le mode de réalisation dé la figure 3A, la détection s'effectue en mode complètement passif tandis que dans le mode de réalisation de la figure 3B, la détection s'effectue en mode semi-actif dans la mesure où l'on prévoit dans ce mode une interrogation active d'un serveur DHCP de l'un des réseaux dès la détection d'une requête DHCP sur l'autre réseau. On comprendra alors que la temporisation E14 n'est pas utile dans ce mode semi-actif.

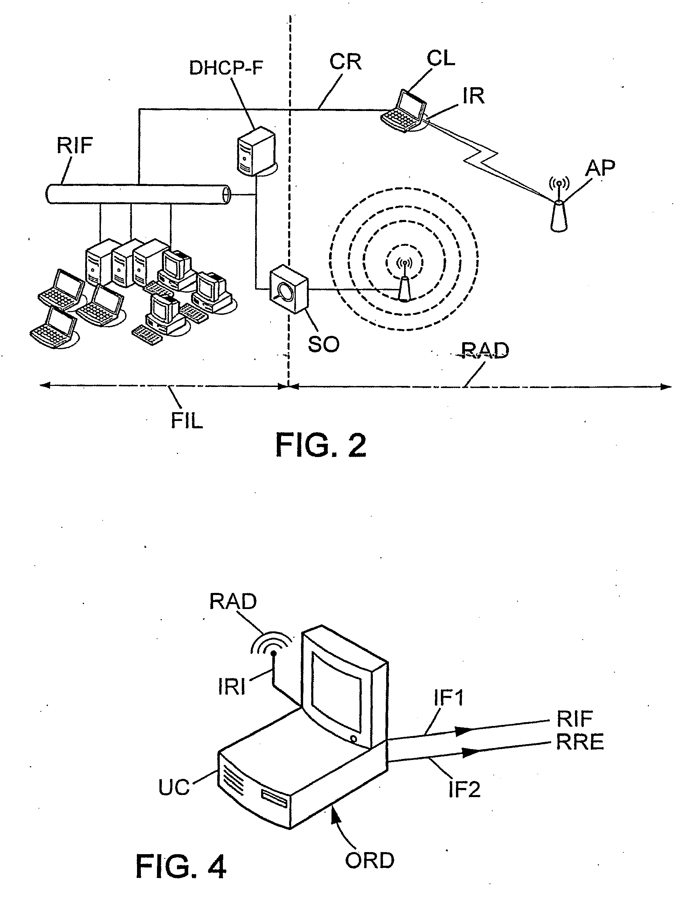

On décrit maintenant en référence à la figure 2 un second contexte d'application de l'invention. La différence la plus marquée dans ce contexte de la figure 2, par rapport à celui présenté en référence à la figure 1, est qu'ici, on ne maîtrise pas la partie radio RAD. La sonde mène la détection sur le réseau filaire de l'entreprise RIF (partie FIL) et sur la voie radio (partie RAD) d'un réseau sans-fil quelconque qui n'appartient pas à l'entreprise ou n'est pas administré par l'entreprise. La sonde effectue une surveillance au niveau radio en analysant les trames; par exemple selon la norme 802.11, communiquées via le réseau sans-fil pour en extraire les informations utiles du protocole DHCP. On indique que le protocole DHCP est au-dessus du protocole UDP (en terme de "couches protocolaires"), lequel est au-dessus du protocole IP, lequel est encore au-dessus du protocole selon IEEE-802.11. Dans cette réalisation, la sonde comprend des moyens spécifiques capables d'écouter la voie radio. On ajoute qu'en principe le trafic radio doit être en clair (non chiffré) sans qu'aucun mécanisme de chiffrement/authentification n'ait été mis en oeuvre car, sinon, les informations utiles ne seraient pas accessibles pour la sonde. Par ailleurs, il est avantageux de déployer une pluralité de sondes sur un site à surveiller.

Dans ce second contexte particulier, les modes de réalisation décrits en référence aux figures 3A et 3B ci-avant peuvent encore être mis en oeuvre. On gardera toutefois à l'esprit que pour la mise en oeuvre du mode de réalisation de la figure 3B, l'entreprise n'a ici la maîtrise que du réseau filaire et, en particulier, accès seulement au serveur DHCP-F côté filaire. Ainsi, la sonde repère ici la réception d'une requête DHCP d'un client côté sans-fil (à l'étape E11) et, au test E18, le serveur DHCP côté filaire (DHCP-F) est interrogé afin de connaître l'adresse IP associée à l'identifiant Host Name qui a été repéré aux étapes E11 et E17.
Par ailleurs, dans les deux modes de réalisation et dans le contexte de la figure 2, l'écoute côté radio est réalisée avec un équipement sans-fil écoutant la voie radio, préférentiellement sur chaque canal radio.

Pour prévoir les deux cas de contextes possibles des figures 1 et 2, même si l'entreprise a la maîtrise d'un réseau sans-fil, une sonde au sens de invention sera préférentiellement équipée pour écouter directement la voie radio d'un réseau sans-fil quelconque, des clients nomades pouvant en effet être associés à la fois au réseau sans-fil de l'entreprise et à un autre réseau sans-fil.
Ainsi, en référence à la figure 4, on décrit maintenant un dispositif, tel qu'une sonde du type précité, pour la mise en oeuvre de l'invention. Un ordinateur ORD comporte deux interfaces filaires et une interface radio (afin de mettre en oeuvre les deux cas des figures 1 et 2 décrits ci-avant). Une interface filaire IF1 est reliée au réseau interne filaire RIF pour interroger le DNS/DHCP côté filaire et/ou écouter le réseau interne pour récupérer les informations DHCP. Une autre interface filaire IF2 est reliée au réseau sans-fil de l'entreprise RRE reliant les points d'accès radio entre eux pour interroger le DNS/DHCP côté radio et/ou écouter le réseau derrière les points d'accès radio pour récupérer les informations DHCP. L'interface radio IRI est en écoute passive et permet de remonter tous les paquets de données transitant sur la voie radio RAD, en particulier les trames DHCP.

L'écoute sur les différents réseaux peut être effectuée grâce à des logiciels connus en soi et utilisant par exemple des captures de type pcap (type tcpdump, ethereal, ou autres).

L'interrogation des serveurs DHCP (côté filaire et côté radio) peut se faire par un interfaçage logiciel spécifique. Une interprétation du contenu des requêtes DHCP permet ensuite de lever des alarmes éventuelles comme décrit en référence aux figures 3A et 3B ci-avant.

Ces logiciels, de manière générale, peuvent être stockés dans l'unité centrale UC de l'ordinateur ORD.

Ainsi, selon l'un des avantages que procure la présente invention, les protocoles exploités pour la détection de double attachement sont couramment utilisés et la mise en oeuvre de l'invention peut alors s'intégrer parfaitement à des architectures logicielles existantes. Il suffit simplement de rajouter une sonde avec des interconnexions filaires pour réaliser les écoutes et interrogations.

Selon un autre avantage, la sonde peut opérer en mode semi-actif (contexte de la figure 3A) ou encore en mode complètement passif (contexte de la figure 3B).

En outre, le mode passif n'est pas repérable par un éventuel attaquant. En réalité, le mode semi-actif n'est pas non plus repérable par un attaquant car l'aspect "actif" est toujours mis en oeuvre côté réseau filaire de l'entreprise, de sorte que les requêtes restent invisibles pour un attaquant venant du réseau sans-fil.

Bien entendu, la présente invention ne se limite pas à la forme de réalisation décrite ci-avant à titre d'exemple ; elle s'étend à d'autres variantes.

En effet, pour rester concise, la description ci-avant ne fait pas état de la réaction d'un administrateur réseau en cas de détection de double attachement.

On indique simplement ici que l'administrateur à qui l'alarme a été notifiée peut engager une réaction comme la recherche de l'équipement incriminé sur l'infrastructure réseau. On comprendra donc que l'invention peut très bien se coupler avec des mécanismes de localisation d'équipements de sorte qu'après une localisation, une réaction automatique comme la coupure de la connexion filaire de l'équipement en situation de double attachement peut être enclenchée.

On a décrit ci-avant un protocole DHCP pour identifier un équipement en situation de double attachement. Toutefois, d'autres protocoles permettant d'atteindre le même résultat peuvent être utilisés en variante. Par exemple, il est possible de s'appuyer aussi sur des protocoles de réseau effectuant des annonces, et dont les informations présentées peuvent permettre d'identifier un équipement.

Par exemple, le protocole SMB (pour "Server Message Block") correspond à une suite de protocoles permettant à plusieurs ordinateurs en réseau de communiquer entre eux. L'une de ses particularités est de procéder par mécanismes d'annonces selon lesquels un hôte qui se joint à un réseau annonce sa présence à tous les équipements voisins (par diffusion). Ces annonces sont faites à chaque connexion à un réseau, mais aussi périodiquement.

Dans la conception de ce protocole, deux particularités intéressantes peuvent entrer en jeu dans la mise en oeuvre de l'invention. Il s'agit d'abord du fait que les annonces contiennent un identifiant d'équipement, identique et indépendamment de l'interface sur laquelle l'émission est faite. Ensuite, les annonces contiennent un champ qui indique explicitement si l'hôte dispose de plusieurs connexions à des réseaux (option "MultiHomed"). L'utilisation de ces deux informations permet d'enrichir les informations collectées par la sonde de détection de double attachement au sens de l'invention afin d'avoir une efficacité de détection accrue.

Par ailleurs, il est possible d'enrichir la mise en oeuvre de l'invention en utilisant d'autres protocoles réseaux qui ont un comportement tel que les émissions de requêtes côté filaire et côté sans-fil contiennent des informations propres au client et qui permettent de mieux l'identifier.

On a décrit ci-avant une prise d'empreinte (étape E15) par "stimuli". Toutefois, d'autres techniques sont envisageables. En effet, pour la confirmation par prise d'empreinte, il est possible de réaliser une prise d'empreinte de manière passive des services et systèmes d'exploitation utilisés par le client, ce qui présente l'avantage de ne pas avoir à déclencher de stimuli pour détecter des propriétés propres au client. Cependant, cette technique impose de réaliser, en parallèle de l'écoute, une analyse non seulement sur les trames DHCP comme expliqué précédemment, mais aussi sur certains champs de protocoles (IP, UDP pour "User Datagram Protocol", TCP pour "Transport Control Protocol") qui permettront d'identifier avec finesse des propriétés intrinsèques au client présent à la fois côté filaire et côté radio.

## Revendications

1. Procédé de détection d'une situation de double attachement d'un équipement communicant,
ledit équipement comportant des moyens de communication avec un réseau sans-fil, d'une part, et avec un réseau filaire, d'autre part,
la situation de double attachement étant définie par une connexion de l'équipement à la fois au réseau sans-fil et au réseau filaire,
procédé dans lequel les connexions avec le réseau filaire et avec le réseau sans-fil sont établies par envoi d'une requête de l'équipement, cette requête comportant un identifiant propre à l'équipement (Host Name), selon un protocole de configuration de connexion prédéterminé (DHCP),
et dans lequel :
a) on écoute, au moins sur le réseau sans-fil, des requêtes de configuration de connexion émises par un ou plusieurs équipements (E10),
b) on analyse le contenu de ces requêtes de configuration de connexion et on en extrait des identifiants d'équipement (E11),
c) à partir d'un identifiant d'équipement extrait à l'étape b), on détermine si cet équipement a envoyé en outre une requête de configuration de connexion au moins au réseau filaire avec le même identifiant (E13;E18), et
d) on lève une alerte si le résultat de l'étape c) est positif (E16).

2. Procédé selon la revendication 1, **caractérisé en ce qu'**il comporte les étapes suivantes :
a) on écoute, à la fois sur le réseau sans-fil et sur le réseau filaire, des requêtes de configuration de connexion émises par un ou plusieurs équipements,
b) on analyse le contenu de ces requêtes de configuration de connexion et on en extrait des identifiants d'équipement, à la fois pour les requêtes émises sur le réseau sans-fil et pour les requêtes émises sur le réseau filaire,
c) par comparaison des identifiants d'équipement dans les requêtes sur les réseaux filaire, d'une part, et sans-fil, d'autre part, on détermine si un équipement a envoyé des requêtes de configuration de connexion à la fois sur le réseau filaire et sur le réseau sans-fil avec le même identifiant (E13), et
d) on lève une alerte si le résultat de l'étape c) est positif.

3. Procédé selon la revendication 2, **caractérisé en ce que** l'on applique une temporisation de durée choisie entre une comparaison positive à l'étape c) et une levée effective de l'alerte à l'étape d).

4. Procédé selon l'une des revendications 2 et 3, **caractérisé en ce que** l'on stocke :
- dans une première table de connexion, au moins les identifiants d'équipement extraits, à l'étape b), des requêtes de configuration de connexion sur l'un des réseaux parmi le réseau sans-fil et le réseau filaire,
- dans une seconde table de connexion, au moins les identifiants d'équipement extraits, à l'étape b), des requêtes de configuration de connexion sur l'autre des réseaux parmi le réseau sans-fil et le réseau filaire,
et **en ce que**, à l'étape c), on mène la comparaison entre les contenus respectifs des première et seconde tables de connexion.

5. Procédé selon la revendication 1, dans lequel on accède à des informations de configuration de connexion auprès d'au moins un serveur (DHCP-F) relié au réseau filaire, **caractérisé en ce que** le procédé comporte les étapes suivantes :
a) on écoute, au moins sur le réseau sans-fil, des requêtes de configuration de connexion émises par un ou plusieurs équipements (E10),
b) on analyse le contenu de ces requêtes de configuration de connexion et on en extrait des identifiants d'équipement (E11),
c) on interroge ledit serveur sur la base d'un identifiant d'équipement extrait à l'étape b) pour déterminer si cet équipement a envoyé en outre une requête de configuration de connexion au moins au réseau filaire avec le même identifiant (E13;E18), et
d) on lève une alerte si le résultat de l'étape c) est positif (E16).

6. Procédé selon la revendication 5, dans lequel on accède à des informations de configuration de connexion auprès d'un premier serveur (DHCP-F) relié au réseau filaire et, en outre, auprès d'un second serveur (DHCP-SF) relié au réseau sans-fil, **caractérisé en ce que** le procédé comporte les étapes suivantes :
a) on écoute, à la fois sur le réseau sans-fil et sur le réseau filaire, des requêtes de configuration de connexion émises par un ou plusieurs équipements (E10),
b) on analyse le contenu de ces requêtes de configuration de connexion et on en extrait des identifiants d'équipement (E11),
et à l'étape c), on interroge le premier serveur ou le second serveur, sur la base d'un identifiant d'équipement extrait à l'étape b) d'une requête reçue sur le réseau sans-fil ou sur le réseau filaire, respectivement.

7. Procédé selon l'une des revendications précédentes, **caractérisé en ce qu'**il comporte une étape de prise d'empreinte (E15) d'un équipement en situation de double attachement, cette étape comportant l'envoi de paquets stimuli à cet équipement et l'analyse des réponses de cet équipement pour déterminer des caractéristiques propres à cet équipement.

8. Procédé selon la revendication 7, **caractérisé en ce que** l'étape de prise d'empreinte (E15) est menée avant la levée effective de l'alerte à l'étape d).

9. Procédé selon l'une des revendications précédentes, **caractérisé en ce que** ledit protocole de configuration de connexion est le protocole DHCP, et **en ce que** l'identifiant d'un équipement au sens de ce protocole correspond à un nom d'hôte ou "Host Name".

10. Dispositif, pour la mise en oeuvre du procédé selon l'une des revendications 1 à 9, de détection d'une situation de double attachement d'un équipement communicant,
ledit équipement comportant des moyens de communication avec un réseau sans-fil, d'une part, et avec un réseau filaire, d'autre part,
la situation de double attachement étant définie par une connexion de l'équipement à la fois au réseau sans-fil et au réseau filaire,
les connexions avec le réseau filaire et avec le réseau sans-fil étant établies par envoi d'une requête de l'équipement, cette requête comportant un identifiant propre à l'équipement (Host Name), selon un protocole de configuration de connexion prédéterminé (DHCP),
**caractérisé en ce que** le dispositif comporte :
a) des moyens de sonde du réseau sans-fil au moins, pour détecter des requêtes de configuration de connexion émises par un ou plusieurs équipements,
b) des moyens d'analyse du contenu de ces requêtes de configuration de connexion et d'extraction des identifiants d'équipement dans ces requêtes de configuration de connexion,
c) des moyens de comparaison pour, à partir d'un identifiant d'équipement extrait, déterminer si cet équipement a envoyé en outre une requête de configuration de connexion au moins au réseau filaire avec le même identifiant, une détermination positive caractérisant un double attachement possible, et
d) des moyens d'alarme pour lever une alerte en cas de détermination positive.

11. Dispositif selon la revendication 10, destiné à des détections de double attachement :
- entre un réseau filaire (RIF) et un réseau sans-fil (RRE), gérés par une même entité,
- et entre le réseau filaire et un réseau sans-fil quelconque (RAD),
**caractérisé en ce qu'**il comporte :
- des moyens de sonde radio (IRI) dudit réseau sans-fil quelconque,
- des moyens de sonde filaires (IF2) dudit réseau sans-fil géré par ladite entité, et
- des moyens de sonde filaires (IF1) du réseau filaire.

12. Programme d'ordinateur, pour la mise en oeuvre du procédé selon l'une des revendications 1 à 9, téléchargeable via un réseau de télécommunication et/ou destiné à être stocké dans une mémoire d'un dispositif et/ou stocké sur un support mémoire destiné à coopérer avec un lecteur de ce dispositif,
ce dispositif étant destiné à la détection d'une situation de double attachement d'un équipement communicant,
ledit équipement comportant des moyens de communication avec un réseau sans-fil, d'une part, et avec un réseau filaire, d'autre part,
la situation de double attachement étant définie par une connexion de l'équipement à la fois au réseau sans-fil et au réseau filaire,
les connexions avec le réseau filaire et avec le réseau sans-fil étant établies par envoi d'une requête de l'équipement, cette requête comportant un identifiant propre à l'équipement (Host Name), selon un protocole de configuration de connexion prédéterminé (DHCP),
le dispositif comportant :
a) des moyens de sonde du réseau sans-fil au moins, pour détecter des requêtes de configuration de connexion émises par un ou plusieurs équipements,
**caractérisé en ce que** le programme d'ordinateur comporte des instructions qui, lorsqu'elles sont exécutées sur le dispositif, réalisent les étapes :
b) d'analyse du contenu des requêtes de configuration de connexion et d'extraction des identifiants d'équipement dans ces requêtes de configuration de connexion,
c) de détermination, à partir d'un identifiant d'équipement extrait, si cet équipement a envoyé en outre une requête de configuration de connexion au moins au réseau filaire avec le même identifiant, et
d) de levée d'alerte en cas de détermination positive.

13. Support de stockage de données comprenant des instructions de code de programme informatique pour l'exécution des étapes d'un procédé selon l'une des revendications 1 à 9.

## Claims

1. Method of detecting a situation of double attachment of a communicating equipment, said equipment comprising means of communication with a wireless network, on the one hand, and with a wired network, on the other hand, the double attachment situation being defined by a connection of the equipment both with the wireless network and with the wired network, a method in which the connections with the wired network and with the wireless network are established by sending a request from the equipment, this request comprising an identifier of the equipment (Host Name), according to a predetermined connection configuration protocol (DHCP), and wherein:
a) connection configuration requests sent by one or more equipments are monitored, at least on the wireless network (E10),
b) the content of these connection configuration requests is analyzed and equipment identifiers are extracted from them (E11),
c) from an equipment identifier extracted in step b), it is determined if this equipment has also sent a connection configuration request at least to the wired network with the same identifier (E13; E18), and
d) an alarm is raised if the result of step c) is positive (E16).

2. Method according to Claim 1, **characterized in that** it comprises the following steps:
a) both the wireless network and the wired network are monitored for connection configuration requests sent by one or more equipments,
b) the content of these requests is analyzed and equipment identifiers are extracted from them, both for the requests sent on the wireless network and for the requests sent on the wired network,
c) by comparison of the equipment identifiers in the requests on the wired network, on the one hand, and on the wireless network, on the other hand, it is determined if an equipment has sent connection configuration requests both on the wired network and on the wireless network with the same identifier (E13), and
d) an alarm is raised if the result of step c) is positive.

3. Method according to Claim 2, **characterized in that** a timing delay of chosen duration is applied between a positive comparison in step c) and an effective raising of the alarm in step d).

4. Method according to either of Claims 2 and 3, **characterized in that** there is stored:
- in a first connection table, at least the equipment identifiers extracted, in step b), from the connection configuration requests on one of the networks among the wireless network and the wired network,
- in a second connection table, at least the equipment identifiers extracted, in step b), from the connection configuration requests on the other one of the networks among the wireless network and the wired network,
and **in that**, in step c), a comparison is made between the respective contents of the first and second connection tables.

5. Method according to Claim 1, wherein connection configuration information is accessed in at least one server (DHCP-F) connected to the wired network, **characterized in that** the method comprises the following steps:
a) connection configuration requests sent by one or more equipments are monitored, at least on the wireless network (E10),
b) the content of the connection configuration requests is analyzed and equipment identifiers are extracted from them (E11),
c) the said server is interrogated on the basis of an equipment identifier extracted in step b) in order to determine if that equipment has also sent a connection configuration request at least to the wired network with the same identifier (E13; E18), and
d) an alarm is raised if the result of step c) is positive (E16).

6. Method according to Claim 5, wherein connection configuration information is accessed on a first server (DHCP-F) connected to the wired network and, additionally, on a second server (DHCP-SF) connected to the wireless network, **characterized in that** the method comprises the following steps:
a) connection configuration requests sent by one or more equipments are monitored on both the wireless network and on the wired network (E10),
b) the content of the connection configuration requests is analyzed and equipment identifiers are extracted from it (E11),
and, in step c), the first server or the second server is interrogated, on the basis of an equipment identifier extracted in step b) from a request received on the wireless network or on the wired network respectively.

7. Method according to one of the preceding claims, **characterized in that** it comprises a step of taking the fingerprint (E15) of an equipment in a double attachment situation, this step comprising the sending of stimuli packets to that equipment and the analysis of the responses from that equipment in order to determine characteristics of that equipment.

8. Method according to Claim 7, **characterized in that** the fingerprint taking step (E15) is carried out before the effective raising of the alarm in step d).

9. Method according to one of the preceding claims, **characterized in that** said connection configuration protocol is the DHCP protocol, and **in that** the identifier of an equipment in the context of this protocol corresponds to a "Host Name".

10. Device for the implementation of the method according to one of Claims 1 to 9, for the detection of a double attachment situation of a communicating equipment, said equipment comprising means of communication with a wireless network, on the one hand, and with a wired network, on the other hand, the double attachment situation being defined by a connection of the equipment both to the wireless network and to the wired network, the connections with the wired network and with the wireless network being established by sending a request from the equipment, this request comprising an identifier of the equipment (Host Name), according to a predetermined connection configuration protocol (DHCP), **characterized in that** the device comprises:
a) probe means at least for the wireless network, in order to detect connection configuration requests sent by one or more equipments,
b) means of analyzing the content of these connection configuration requests and of extraction of the equipment identifiers in these connection configuration requests,
c) means of comparison for determining, from an extracted equipment identifier, if that equipment has also sent a connection configuration request at least to the wired network with the same identifier, a positive determination characterizing a possible double attachment, and
d) alarm means for raising an alarm in the event of a positive determination.

11. Device according to Claim 10, intended for detections of double attachment:
- between a wired network (RIF) and a wireless network (RRE), managed by a same entity,
- and between the wired network and any wireless network (RAD),
**characterized in that** it comprises:
- radio probe means (IRI) for said any wireless network,
- wired probe means (IF2) for the wireless network managed by said entity, and
- wired probe means (IF1) for the wired network.

12. Computer program, for the implementation of the method according to one of Claims 1 to 9, downloadable via a telecommunications network and/or intended for storage in a memory of a device and/or stored on a memory medium intended to cooperate with a reader of that device, that device being intended for the detection of a double attachment situation of a communicating equipment, said equipment comprising means of communication with a wireless network, on the one hand, and with a wired network, on the other hand, the double attachment situation being defined by a connection of the equipment both to the wireless network and to the wired network, the connections with the wired network and with the wireless network being established by sending a request from the equipment, this request comprising an identifier of the equipment (Host Name), according to a predetermined connection configuration protocol (DHCP), the device comprising:
a) probe means of at least the wireless network, for detecting connection configuration requests sent by one or more equipments,
**characterized in that** the computer program comprises instruction which, when they are executed on the device, carries out the steps:
b) of analyzing the content of the connection configuration requests and of extraction of the equipment identifiers in these connection configuration requests,
c) of determining, from an extracted equipment identifier, if that equipment has also sent a connection configuration request at least to the wired network with the same identifier, and
d) of raising an alarm in the event of a positive determination.

13. Data storage medium comprising computer program instruction code for the execution of the steps of a method according to one of Claims 1 to 9.

## Patentansprüche

1. Verfahren zur Erfassung einer Situation der doppelten Anbindung eines kommunizierenden Geräts, wobei das Gerät Einrichtungen zur Kommunikation mit einem drahtlosen Netz einerseits und mit einem drahtgebundenen Netz andererseits aufweist,
wobei die Situation der doppelten Anbindung durch eine gleichzeitige Verbindung des Geräts mit dem drahtlosen Netz und mit dem drahtgebundenen Netz definiert wird,
Verfahren, bei dem die Verbindungen mit dem drahtgebundenen Netz und mit dem drahtlosen Netz durch Senden einer Anforderung des Geräts, wobei diese Anforderung eine dem Gerät eigene Kennung (Host Name) aufweist, gemäß einem vorbestimmten Verbindungskonfigurationsprotokoll (DHCP) aufgebaut werden,
und bei dem:
a) mindestens im drahtlosen Netz von einem oder mehreren Geräten gesendete Verbindungskonfigurationsanforderungen angehört werden (E10),
b) der Inhalt dieser Verbindungskonfigurationsanforderungen analysiert und Gerätekennungen daraus extrahiert werden (E11),
c) ausgehend von einer im Schritt b) extrahierten Gerätekennung bestimmt wird, ob dieses Gerät außerdem eine Verbindungskonfigurationsanforderung mindestens an das drahtgebundene Netz mit der gleichen Kennung gesendet hat (E13; E18), und
d) ein Alarm ausgelöst wird, wenn das Ergebnis des Schritts c) positiv ist (E16).

2. Verfahren nach Anspruch 1, **dadurch gekennzeichnet, dass** es die folgenden Schritte aufweist:
a) es werden gleichzeitig im drahtlosen Netz und im drahtgebundenen Netz von einem oder mehreren Geräten gesendete Verbindungskonfigurationsanforderungen abgehört,
b) der Inhalt dieser Verbindungskonfigurationsanforderungen wird analysiert, und es werden Gerätekennungen gleichzeitig für die im drahtlosen Netz gesendeten Anforderungen und für die im drahtgebundenen Netz gesendeten Anforderungen daraus extrahiert,
c) durch Vergleich der Gerätekennungen in den Anforderungen im drahtgebundenen Netz einerseits und im drahtlosen Netz andererseits wird bestimmt, ob ein Gerät gleichzeitig Verbindungskonfigurationsanforderungen im drahtgebundenen Netz und im drahtlosen Netz mit der gleichen Kennung gesendet hat (E13), und
d) es wird ein Alarm ausgelöst, wenn das Ergebnis des Schritts c) positiv ist.

3. Verfahren nach Anspruch 2, **dadurch gekennzeichnet, dass** eine Verzögerung einer gewählten Dauer zwischen einem positiven Vergleich im Schritt c) und einem tatsächlichen Auslösen des Alarms im Schritt d) angewendet wird.

4. Verfahren nach einem der Ansprüche 2 und 3, **dadurch gekennzeichnet, dass** gespeichert wird:
- in einer ersten Verbindungstabelle mindestens die im Schritt b) aus den Verbindungskonfigurationsanforderungen in einem der Netze, dem drahtlosen Netz und dem drahtgebundenen Netz, extrahierten Gerätekennungen,
- in einer zweiten Verbindungstabelle mindestens die im Schritt b) aus den Verbindungskonfigurationsanforderungen in dem anderen der Netze, dem drahtlosen Netz und dem drahtgebundenen Netz, extrahierten Gerätekennungen,
und dass im Schritt c) der Vergleich zwischen den Inhalten der ersten bzw. der zweiten Verbindungstabelle durchgeführt wird.

5. Verfahren nach Anspruch 1, bei dem auf Verbindungskonfigurationsinformationen in mindestens einem mit dem drahtgebundenen Netz verbundenen Server (DHCP-F) zugegriffen wird, **dadurch gekennzeichnet, dass** das Verfahren die folgenden Schritte aufweist:
a) mindestens im drahtlosen Netz werden Verbindungskonfigurationsanforderungen abgehört, die von einem oder mehreren Geräten gesendet werden (E10),
b) der Inhalt dieser Verbindungskonfigurationsanforderungen wird analysiert, und es werden Gerätekennungen daraus extrahiert (E11),
c) der Server wird auf der Basis einer im Schritt b) extrahierten Gerätekennung abgefragt, um zu bestimmen, ob dieses Gerät außerdem eine Verbindungskonfigurationsanforderung mindestens an das drahtgebundene Netz mit der gleichen Kennung gesendet hat (E13; E18), und
d) es wird ein Alarm ausgelöst, wenn das Ergebnis des Schritts c) positiv ist (E16).

6. Verfahren nach Anspruch 5, bei dem auf Verbindungskonfigurationsinformationen in einem ersten Server (DHCP-F), der mit dem drahtgebundenen Netz verbunden ist, und außerdem in einem zweiten Server (DHCP-SF) zugegriffen wird, der mit dem drahtlosen Netz verbunden ist, **dadurch gekennzeichnet, dass** das Verfahren die folgenden Schritte aufweist:
a) es werden gleichzeitig im drahtlosen Netz und im drahtgebundenen Netz Verbindungskonfigurationsanforderungen abgehört, die von einem oder mehreren Geräten gesendet werden (E10),
b) der Inhalt dieser Verbindungskonfigurationsanforderungen wird analysiert, und es werden Gerätekennungen daraus extrahiert (E11),
und im Schritt c) wird der erste Server oder der zweite Server auf der Basis einer Gerätekennung abgefragt, die im Schritt b) aus einer im drahtlosen Netz bzw. im drahtgebundenen Netz empfangenen Anforderung extrahiert wird.

7. Verfahren nach einem der vorhergehenden Ansprüche, **dadurch gekennzeichnet, dass** es einen Schritt der Abdrucknahme (E15) eines Geräts in einer Situation der doppelten Anbindung aufweist, wobei dieser Schritt das Senden von Stimuli-Paketen an dieses Gerät und die Analyse der Antworten von diesem Gerät aufweist, um diesem Gerät eigene Merkmale zu bestimmen.

8. Verfahren nach Anspruch 7, **dadurch gekennzeichnet, dass** der Schritt der Abdrucknahme (E15) vor dem tatsächlichen Auslösen des Alarms im Schritt d) durchgeführt wird.

9. Verfahren nach einem der vorhergehenden Ansprüche, **dadurch gekennzeichnet, dass** das Verbindungskonfigurationsprotokoll das Protokoll DHCP ist, und dass die Kennung eines Gerät im Sinne dieses Protokolls einem Host-Namen oder "Host Name" entspricht.

10. Vorrichtung zur Anwendung des Verfahrens nach einem der Ansprüche 1 bis 9 zur Erfassung einer Situation der doppelten Anbindung eines kommunizierenden Geräts,
wobei das Gerät Einrichtungen zur Kommunikation mit einem drahtlosen Netz einerseits und mit einem drahtgebundenen Netz andererseits aufweist,
wobei die Situation der doppelten Anbindung durch eine gleichzeitige Verbindung des Geräts mit dem drahtlosen Netz und mit dem drahtgebundenen Netz definiert wird,
wobei die Verbindungen mit dem drahtgebundenen Netz und mit dem drahtlosen Netz durch Senden einer Anforderung des Geräts, wobei diese Anforderung eine dem Gerät eigene Kennung (Host Name) aufweist, gemäß einem vorbestimmten Verbindungskonfigurationsprotokoll (DHCP) aufgebaut werden,
**dadurch gekennzeichnet, dass** die Vorrichtung aufweist:
a) mindestens Sondeneinrichtungen des drahtlosen Netzes, um von einem oder mehreren Geräten gesendete Verbindungskonfigurationsanforderungen zu erfassen,
b) Einrichtungen zur Analyse des Inhalts dieser Verbindungskonfigurationsanforderungen und zur Extraktion der Gerätekennungen aus diesen Verbindungskonfigurationsanforderungen,
c) Vergleichseinrichtungen, um ausgehend von einer extrahierten Gerätekennung zu bestimmen, ob dieses Gerät außerdem eine Verbindungskonfigurationsanforderung mindestens an das drahtgebundene Netz mit der gleichen Kennung gesendet hat, wobei eine positive Bestimmung eine mögliche doppelte Anbindung kennzeichnet, und
d) Alarmeinrichtungen, um im Fall einer positiven Bestimmung einen Alarm auszulösen.

11. Vorrichtung nach Anspruch 10, die bestimmt ist für Erfassungen einer doppelten Anbindung:
- zwischen einem drahtgebundenen Netz (RIF) und einem drahtlosen Netz (RRE), die von der gleichen Instanz verwaltet werden,
- und zwischen dem drahtgebundenen Netz und einem beliebigen drahtlosen Netz (RAD),
**dadurch gekennzeichnet, dass** sie aufweist:
- Radiosonde-Einrichtungen (IRI) des beliebigen drahtlosen Netzes,
- Drahtsonde-Einrichtungen (IF2) des von der Instanz verwalteten drahtlosen Netzes, und
- Drahtsonde-Einrichtungen (IF1) des drahtgebundenen Netzes.

12. Computerprogramm zur Anwendung des Verfahrens nach einem der Ansprüche 1 bis 9, das über ein Telekommunikationsnetz heruntergeladen werden kann und/oder dazu bestimmt ist, in einem Speicher einer Vorrichtung gespeichert zu werden und/oder in einem Speicherträger gespeichert zu werden, der dazu bestimmt ist, mit einem Lesegerät dieser Vorrichtung zusammenzuwirken,
wobei diese Vorrichtung zur Erfassung einer Situation der doppelten Anbindung eines kommunizierenden Geräts bestimmt ist,
wobei das Gerät Einrichtungen zur Kommunikation mit einem drahtlosen Netz einerseits und mit einem drahtgebundenen Netz andererseits aufweist,
wobei die Situation der doppelten Anbindung durch eine gleichzeitige Verbindung des Geräts mit dem drahtlosen Netz und mit dem drahtgebundenen Netz definiert wird,
wobei die Verbindungen mit dem drahtgebundenen Netz und mit dem drahtlosen Netz durch Senden einer Anforderung des Geräts, wobei diese Anforderung eine dem Gerät eigene Kennung (Host Name) aufweist, gemäß einem vorbestimmten Verbindungskonfigurationsprotokoll (DHCP) aufgebaut werden,
wobei die Vorrichtung aufweist:
a) Sondeneinrichtungen mindestens des drahtlosen Netzes, um von einem oder mehreren Geräten gesendete Verbindungskonfigurationsanforderungen zu erfassen,
**dadurch gekennzeichnet, dass** das Computerprogramm Anweisungen aufweist, die, wenn sie in der Vorrichtung ausgeführt werden, die folgenden Schritte durchführen:
b) Analyse des Inhalts der Verbindungskonfigurationsanforderungen und Extraktion der Gerätekennungen aus diesen Verbindungskonfigurationsanforderungen,
c) Bestimmung, ausgehend von einer extrahierten Gerätekennung, ob dieses Gerät außerdem eine Verbindungskonfigurationsanforderung mindestens an das drahtgebundene Netz mit der gleichen Kennung gesendet hat, und
d) Auslösen eines Alarms im Fall einer positiven Bestimmung.

13. Datenspeicherträger, der Computerprogramm-Codeanweisungen zur Ausführung der Schritte eines Verfahrens nach einem der Ansprüche 1 bis 9 aufweist.
